# EUROPEAN PATENT APPLICATION

(11) **EP 4 420 896 A1**
(43) Date of publication of application: **28.08.2024**
(21) Application number: 24159613.9
(22) Date of filing: 26.02.2024
(51) Int. Cl.: B60B 33/02, A61H 3/04, B60B 33/00

(54) **A CASTOR WITH DIRECTION LOCK**

(30) Priority: 24.02.2023 GB 202302760
(71) Applicant: James Lecky Design Limited, Lisburn BT28 2SA (GB)
(72) Inventor: Dobbs, Colm, Lisburn, BT28 2SA (GB); Ward, Thomas, Lisburn, BT28 2SA (GB)
(74) Representative: FRKelly

(57) **Abstract**

A castor comprising: a castor body for coupling the castor to an apparatus, at least one wheel coupled to the castor body, wherein said wheel is operable to rotate about a wheel axis. The castor body is configured to swivel about a swivel axis which is substantially perpendicular to the wheel axis such as to rotate the orientation of the wheel with respect to the swivel axis. A locking means which is configured to adopt at least first state and a second state. In the first state, the locking means is configured to allow swivelling motion of the castor body about the swivel axis and in the second state the locking means is configured to inhibit the swivelling motion of the castor body about the swivel axis such that the orientation of the castor wheel is locked relative to the swivel axis.

## Description

### Field of the Invention

This invention relates to a castor with direction lock and a walking support apparatus comprising one or more of said castors.

### Background to the Invention

For many users of walking products, producing the necessary leg movements, weight shift and gait pattern to move themselves in different directions is a very difficult task. Adding the demand of moving and controlling the frame to which the user is attached only makes the task even more difficult. Also, traditional walking therapy techniques often involve the therapist using their hands to support or control different parts of their patient's body. However, this can be difficult if they have to guide the frame for the patient with their hands too and reduce the independent movement of the user.

Further people with certain disabilities or conditions, such as cerebral palsy, can have difficulty controlling the movements of their legs, making it difficult to produce an effective gait pattern which would enable them to move as they desire. Even in instances where the person can move themselves, there can be various detrimental physiological effects of walking with an uncontrolled or unnatural gait pattern. Consequently it would be advantageous if there was a means by which to restrict the movement of the user in one or more pre-defined directions such as to enable the user to train the different muscle groups associated with those directions such forward to back and side to side movements.

It would be desirable to obviate or mitigate at least some of the deficiencies described above.

### Summary of the Invention

A first aspect of the present invention provides a castor as recited in claim 1. In particular the first aspect of the present invention provides a castor, comprising: a castor body for coupling the castor to an apparatus; at least one wheel coupled to the castor body, wherein said wheel is operable to rotate about a wheel axis; wherein the castor body is configured to swivel about a swivel axis which is substantially perpendicular to the wheel axis such as to rotate the orientation of the wheel with respect to the swivel axis; and a locking means which is configured to adopt at least first state and a second state; wherein said first state, the locking means is configured to allow swivelling motion of the castor body about the swivel axis; wherein said second state the locking means is configured to inhibit the swivelling motion of the castor body about the swivel axis such that the orientation of the castor wheel is locked relative to the swivel axis.

Ideally, wherein the castor body comprises an upper part and a lower part, wherein the wheel is coupled to the lower part which is configured to swivel about the swivel axis relative to the upper part.

Preferably, wherein the locking means in said second state is configured to couple the upper and lower parts of the castor body together to prevent swivelling movement of the lower part relative to the upper part.

Ideally, wherein the locking means comprises co-operable male and female members which are configured to releasably couple together such as to couple the upper and lower parts of the castor body together.

Preferably, wherein the locking means comprises at least one pin and at least one aperture within which at least part of said pin is receivable such as to couple the upper and lower parts together.

Ideally, wherein the pin comprises a resiliently biased pin.

Preferably, wherein said pin is retained entirely within the lower part of the castor body when the locking means adopts said first state.

Ideally, wherein said pin receiving aperture is located on the upper part of the castor body.

Preferably, wherein the upper part comprises a plurality of pin receiving apertures.

Ideally, wherein the upper part is substantially circular in shape and wherein the pin receiving apertures are spaced apart around the circumference of the upper part.

Preferably, wherein the pin receiving apertures are spaced apart with respect to one another such that they are substantially equidistant from one another around the upper part.

Ideally, wherein the upper part comprise two pin receiving aperture which are spaced apart from one another at 180 positions around the circumference of the upper part.

Preferably, wherein the upper part comprises four pin receiving apertures and wherein the pin receiving apertures are spaced apart from one each adjacent pin receiving aperture at 90 degree positions around the upper part such that they are located at 90, 180, 270 and 360 degree positions around the upper part.

Ideally, wherein the upper part comprises a plurality of transitional sections located between the plurality of pin receiving apertures.

Preferably, wherein the transitional sections comprise a pin blocking member which is configured to allow the lower part of the castor body to swivel between positions defined by the pin receiving apertures in the upper part of the castor body when the locking means has adopted the second state.

Ideally, further comprising an actuation means which is configured to vary the locking means between the first and second states.

Preferably, wherein the actuation means comprises a switch which is variable between first and second positions corresponding to the first and second states of the locking means respectively.

Ideally, wherein the actuation means further comprise a sleeve within which the resiliently biased pin is slidably received at least in part.

Preferably, wherein the switch and sleeve are coupled together such that movement of the switch between the first and second positions causes respective movement of the sleeve, wherein the sleeve is open ended at both sides and accommodates the pin therein, at least in part.

Ideally, wherein the pin at one end, is shaped and dimensioned for engagement with the pin receiving aperture whilst at the opposing end the pin comprises one or more lateral protrusions which are configured to abut the sleeve such as to restrict the movement of the pin within the sleeve.

A second aspect of the present invention provides a walking support apparatus as recited in claim 19. In particular the second aspect of the invention provides, a walking support apparatus, comprising: a frame; and at least one castor as defined in the first aspect of the invention. The second aspect of the invention ideally, further comprising a plurality of the castors as recited in any of the previous claims.

### Brief Description of the Drawings

The present invention will now be described by way of example with reference to the accompanying drawings, in which:
Figure 1 is a sectional perspective view of a castor defining a first aspect of the present invention, in particular showing a locking means provided therein;
Figure 2 is a perspective view of a walking support apparatus including a plurality of the castors which defines a second aspect of the present invention, wherein the locking means of the castors are shown in a first state;
Figure 3 a perspective view of the walking support apparatus, wherein the locking means of the castors are shown in a second state;
Figure 4 is a front plan view of the castor showing an actuation means in a second positon which is configured to cause the locking means to adopt the second state;
Figure 5 is a front plan view of the castor showing the actuation means in a first positon which is configured to cause the locking means to adopt the first state;
Figure 6 is a top plan view of the castor with the locking means shown in the first state;
Figure 7 is a top plan view of the castor with the locking means shown in the second state;
Figure 8 is a top plan view of the castor with the locking means shown in the second state;
Figure 9 is a side sectional view of the castor, in particular showing the locking means in the first state;
Figure 10 is a side sectional view of the castor, in particular showing the locking means in the second state;
Figure 11 is a side sectional view of the castor, in particular showing the locking means in the second state;
Figure 12 is a front sectional view of the castor, in particular showing the locking means in the first state;
Figure 13 is a front sectional view of the castor, in particular showing the locking means in the second state; and
Figure 14 is a front sectional view of the castor, in particular showing the locking means in the second state.

### Detailed Description

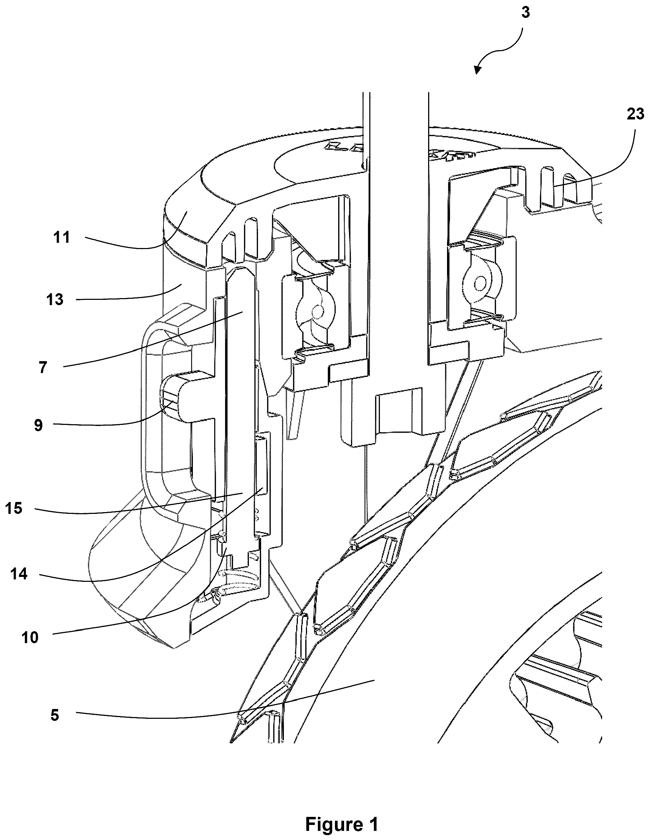

Referring now to the drawings, in Figure 1 there is shown, generally indicated by the reference numeral 1, a castor defining a first aspect of the present invention. The castor 1 comprises a castor body 3 for coupling the castor 1 to an apparatus. The castor 1 further comprises at least one wheel 5 which is coupled to the castor body 3, which is operable to rotate about a wheel axis. The wheel axis defined by an axle which the wheel 5 rotates about. The castor body 3 is configured to swivel about a swivel axis which is substantially perpendicular to the wheel axis such as to rotate the orientation of at least part of the castor body 3 and the wheel 5 with respect to the swivel axis. The castor 1 further comprises a locking means 7 which is configured to adopt at least a first state and a second state. Wherein the first state, the locking means 7 is configured to allow swivelling motion of the castor body 3 about the swivel axis and in the second state, the locking means 7 is configured to inhibit the swivelling motion of the castor body 3 about the swivel axis such that the orientation of the wheel 5 and typically part of the castor body 3 is locked relative to the swivel axis.

The castor body 1 preferably comprises an upper part 11 and a lower part 13. Ideally the wheel 5 is coupled, in a manner such as to permit rotation movement of the wheel 5, to the lower part 13. The lower part 13 is configured to swivel about the swivel axis relative to the upper part 11 which remains fixed. The upper part 11 is typically plate like and is ideally substantially circular in shape. The lower part 13 is typically substantially cylindrical in shape. The lower part 13 preferably further comprises first and second forks which extend from opposing sides of the lower part to define a channel with which the wheel 5 is located and operable to rotate. The wheel 5 being coupled to the forks with the wheel axle extending there between.

The locking means 7 when in the second state is configured to releasably couple the upper and lower parts 11, 13 of the castor body 3 together such as to prevent swivelling movement of the lower part 13 relative to the upper part 11. The locking means 7 ideally comprises co-operable male and female members which are configured to releasably couple together, when aligned, such as to couple the upper and lower parts of the castor body together. To this end the locking means 7 preferably comprises a pin 15 and at least one pin receiving aperture 17 within which at least part of said pin 15 is receivable. The pin 15 is a resiliently biased pin. The pin 15 comprises an elongate member which is seated within a channel formed in the lower part 13 which extends substantially along the length of the castor body 3 in a direction parallel to the swivel axis. The pin 15 is housed within castor body 3, and is, typically, at least in the first state, contained entirely within the lower part 13 of the castor body 3. The pin receiving aperture 17 is located in the upper part 11 of the castor body 3. The upper and lower parts 11 to 13 are coupled together such that when the lower part 13 swivels relative to the upper part 11, the pin 15 and pin receiving apertures 17 are configured to align with respect to one another. When the pin 15 adopts the first state, the lower part 13 will swivel about the upper part with no restriction with regards to direction. However, when the pin 15 adopts the second state, the biasing of the pin 15 will result in the pin 15 engaging with the pin receiving aperture 17 when they align with respect to one another as a result of the swivelling motion of the lower part 13 relative to the upper part 11.

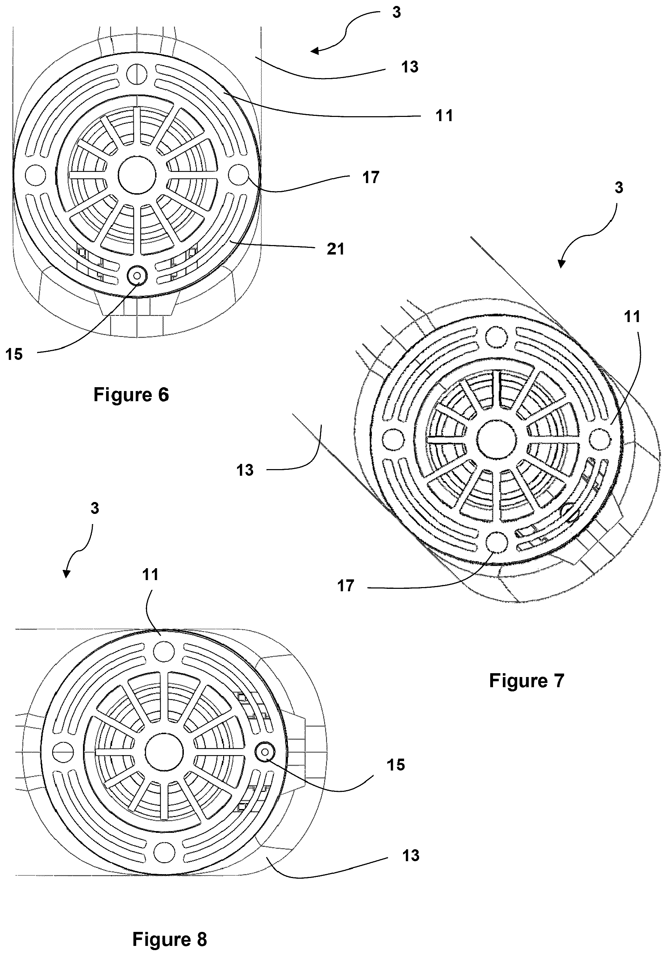

In a preferred embodiment, as shown for example in Figures 6 to 8, the upper part ideally 11 comprises a plurality of pin receiving apertures 17. The upper part 11 is preferably substantially circular in shape. The pin receiving apertures 17 preferably extend substantially through the entire width of the upper part 11. However, in an alternative embodiment, the pin receiving apertures 17 may extend only partially through the upper part 11 to the extent that is sufficient for receiving at least part of the pin 15 for restricting movement of the lower part 13 relative to the upper part 11. As shown in Figures 6 to 7, the pin receiving apertures 17 are spaced apart around the upper part 11. In particular, the pin receiving apertures 17 are provided in and extend through the top and bottom surfaces of the upper part 11, the top surface being the surface which faces away from the ground on which the castor 1 rests in-use. Preferably the pin receiving apertures 17 are spaced apart with respect to one another such that they are substantially equidistant from one another around the upper part 11, typically around the circumference thereof. In one embodiment, the upper part 11 comprises at least two pin receiving apertures 17 which are ideally spaced apart from one another around the circumference of the upper part 11, typically at opposing ends of the upper part 11. To this end the at least two pin receiving apertures 17 are preferably spaced apart at 180° positions with respect to one another around the upper part 11. The two pin receiving apertures 17 are preferably located at 90º and 270º positions around the upper part 11. Alternatively, the upper part 11 may comprise at least four pin receiving apertures 17 which are ideally spaced apart from one another around the upper part 11 such that each pin receiving aperture 17 is spaced apart from each adjacent pin receiving aperture at 90 degree positions around the upper part 11. To this end, the four pin receiving apertures 17 are located at 90°, 180º, 270º and 360 degree positions around the circumference of the circular shaped upper part 11 such as shown in Figures 6 to 8. Further alternatively, the upper part 11 may comprise any number of pin receiving apertures 17. The pin receiving apertures 17 are positioned such that when the pin 15 engages with one of the pin receiving apertures 17 in the second state, the orientation of the lower part 13 and consequently the wheel 5 is locked relative to the swivel axis such as to allow rotation of wheel 5 in a fixed orientation, typically in a fore-aft direction or a side to side direction.

The upper part 11 ideally further comprises a plurality of transitional sections 21 which are located and extend between the plurality of pin receiving apertures 17. The transitional sections 21 comprise a pin blocking member 23 which is configured to allow the lower part 13 of the castor body 3 to swivel between positions defined by the pin receiving apertures 17 in the upper part 11 of the castor body 3 when the locking means 5 has adopted the second state such that it is biased towards engaging with the pin receiving aperture 17 in the upper part 11. To this end the pin blocking member 23 typically comprises an elongate rib which extends the length of the distance between respective pin receiving apertures 17 which prevents the pin 15 from engaging with the upper part 11.

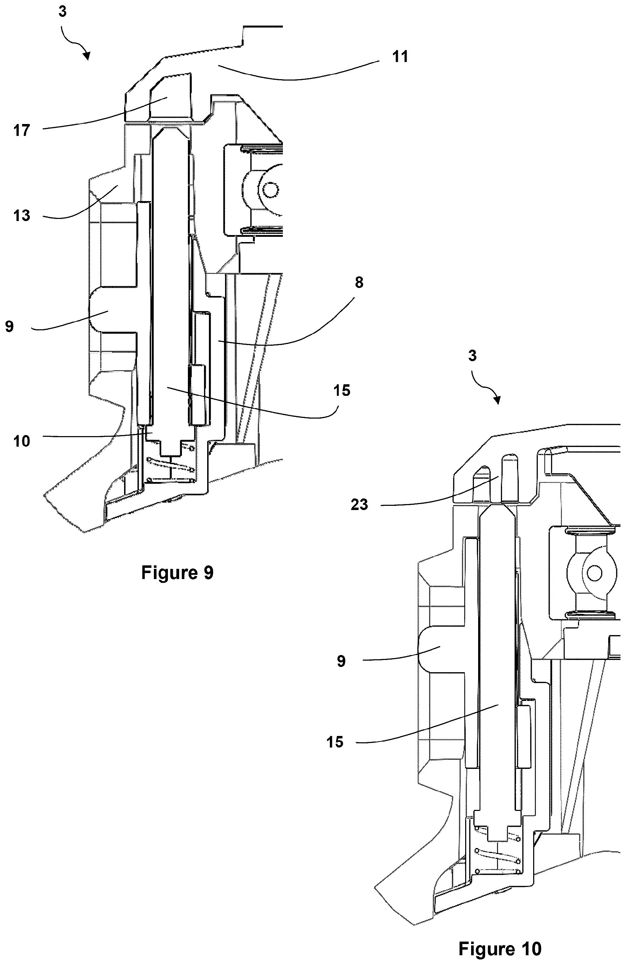

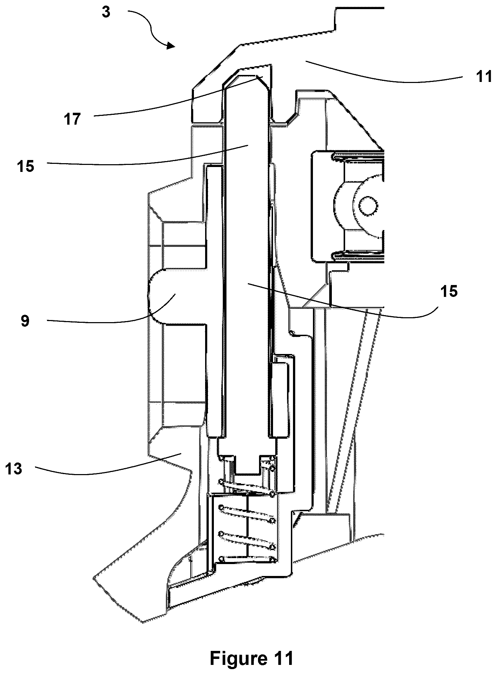

The castor 1 further comprises an actuation means 9 which is configured to vary the locking means 7 between the first and second states. To this end the actuation means 9 is typically coupled to the locking means 7. The actuation means 9 ideally comprises a switch which is variable between first and second positions corresponding to the first and second states of the locking means 7 respectively. The actuation means 7 may further comprise a sleeve 8 within which at least part of the locking means 7 may be slidably received. The switch and sleeve 8 are coupled together, typically integrally so, such that movement of the switch between first and second positions causes respective movement of the sleeve 8. The sleeve 8 is typically open ended at both sides and accommodates the pin 15 therein, at least in part. The pin 15 comprises the elongate member which at one end, is typically shaped such as to engage with the pin receiving aperture 17 whilst at the opposing end the pin 15 comprises one or more lateral protrusions 10 which are configured to abut the sleeve 8 end such as to restrict the movement of the pin 15. For example, when the actuation means 7 is in the first position, as shown in Figure 9, the sleeve 8 retains the pin 15 in the first state wherein the pin 15 is entirely contained within the lower part 13 of the castor body 3. Upon actuation of the actuation means 7 such that it adopts the second position, as shown in Figure 11, the sleeve 8 is moved upwards in the direction of the upper part 11 to an extent that a part of the sleeve 8 contacts an interior wall 14 of the lower part 13 which prevents further upward movement of the sleeve 8. Movement of the sleeve 8 in an upward direction allows for corresponding movement of the resiliently biased pin 15 such that the pin 15 extends up and away from the lower part 13 such as to engage with the pin receiving aperture 17 in the upper part 11 of the castor body 3.

Further to the above, as shown in Figure 10, when the actuation means 7 is actuated such that it adopts the second position such as to cause the pin 15 to adopt the second state but the lower part 13 is pivoted relative to the upper part 11 such that the channel containing the pin 15 and one of the pin receiving apertures 17 are not aligned, the pin 15 abuts the pin blocking member 23 provided along the transitional section 21 of the upper part 11. Advantageously, this ensures that engagement of the pin 15 and pin receiving apertures 17 only occurs at pre-defined positions which correspond to pre-defined directions.

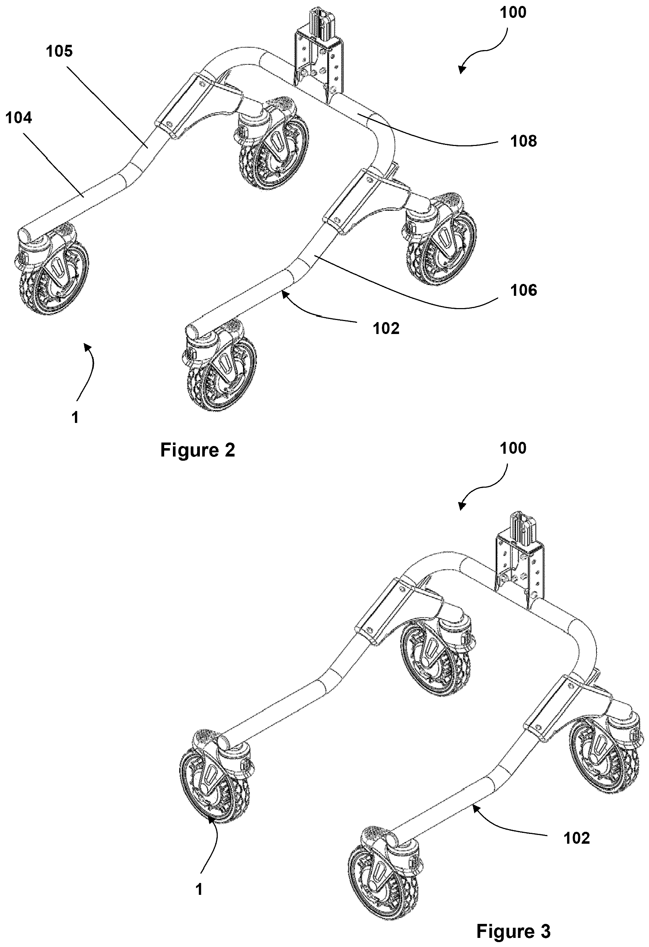

Referring now to Figures 2 and 3 of the drawings, there is shown, generally indicated as 100, a walking support apparatus embodying a second aspect of the invention. The walking support apparatus 100 comprises a frame structure 102, which is typically mounted on a plurality of wheels, wherein at least one of said wheels comprise a castor 1, the castor comprising that which embodies the first aspect of the invention as described previously. Preferably, each of the wheels comprise the castors 1 which embody the first aspect of the present invention In a preferred embodiment the castors 1 are pivotably mounted upon the frame structure such that the castor wheels 5 are multidirectional, at least when the locking means 7 of the castors 1 has adopted the first state. The upper part 11 of the castors 1 is fixed relative to the frame structure 102 such that the pin receiving apertures 17 are located in pre-defined locations relative to the frame structure 102. The castors 1 are ground-engaging and facilitate movement of the support apparatus 100 in any direction desired by the user in-use. In preferred embodiments therefore, the frame structure 102 is a self-propelled wheeled structure. The frame structure typically comprises a base 104, which carries the castors 1, and an upper portion 108. In use, one or more users are connectable to the frame structure 102, typically to an upper portion 108 thereof. Accordingly, the upper portion 108 is configured, e.g. shaped and dimensioned, for connection with one or more upright (i.e. standing or walking) users.

In one embodiment, where the castor 1, in particular the upper part 11, comprises two pin receiving apertures 17 as described previously, these are located along the same axis to one another which extends perpendicular to the part of the frame structure 102 to which the castor 1 is coupled such that they are located at 90 and 270 degree positions on the upper part 11 i.e. they are laterally located relative to the frame structure 102. In this manner when the castor 1 adopts the locked state, movement of the walking support apparatus 100 is restricted to a side to side direction wherein the user, when coupled to the walking support apparatus 100, faces forward but their movement is restricted to that side to side direction.

In an alternative embodiment, wherein the castor comprises four pin receiving apertures 17 such as is shown in Figures 6 to 8, two of the pin receiving apertures 17 are located on the same axis which extends perpendicular to the frame structure 102 such that they are located at 90 and 270 degree positions on the upper part 11 whilst the other two pin receiving apertures 17 are located on the same axis to one another which extends substantially along the same axis as the frame structure 102 (to the extent that they are substantially aligned with the frame structure 102) such that they are located at 180 and 360 degree positions around the upper part 11. Accordingly, the 180 and 360 degree positioned pin receiving apertures 17 comprise those apertures which are most forward and rearward of the pin receiving apertures 17 whilst the 90 and 270 degree positioned pin receiving apertures are equally located there between. In this manner the castor 1, when in the locked state and engaged with either of the 90 and 270 degree pin receiving apertures 7, is configured to restrict movement of the walking support apparatus 100 to a side to side direction. Further, when the castor 1 adopts the locked state and is engaged with either of the 180 or 360 degree pin receiving apertures 7 the castor 1 is configured to restrict movement of the walking support apparatus 100 along a fore-aft direction wherein the user, when coupled to the walking support apparatus 100, faces forward and their movement is restricted to that frontward backward direction.

Optionally the base 104 and upper portion 108 comprise a plurality of sections which are coupleable together; these sections may be pivotably coupled together such as to allow the frame structure 102 of the support apparatus 1 to be foldable/collapsible in-use. A connecting portion between the upper portion 108 and the base 104 may comprise one or more telescopic struts (not shown) such as to allow variation in the height of the upper portion 108 relative to the base 104 in-use. The upper portion 108 may be coupled to the base 104 via a resilient biasing means (not shown), the resilient biasing means may comprise at least one spring or gas strut or any other suitable biasing means. In an alternative embodiment the base 104 and upper portion 108 may be made from a single piece and/or otherwise rigidly fixed together.

The base 104 typically comprises first and second side members 105, 106 which extend in a spaced apart arrangement substantially parallel to each other. The first and second sides 105, 106 are coupled via the upper portion 108. The upper portion 108 typically extends transversely between the first and second sides 105, 106, and may be substantially perpendicular to the first and second sides 105, 106. An elongate channel is typically defined between the first and second sides 105, 106 of the frame structure 102, the channel being shaped and dimensioned to accommodate at least one user therein. Optionally, a respective front and rear channel are defined in front of and behind, respectively, the upper portion 108, each channel being shaped and dimensioned to accommodate a respective user. The upper portion 108, or at least part of it, is positioned for connection to a respective user in the, or each, adjacent channel. Advantageously, the or each elongate channel is open-ended to allow for easy entry and exit of the user when utilising the walking support apparatus 100. The user in need of walking assistance is accommodated by the front channel. In some embodiments, the primary user is connected to the upper portion 108 during use. It will apparent from the foregoing that, in preferred embodiments, the frame structure 102 is configured, i.e. shaped and dimensioned, to define a station for receiving the user. The station being configured to accommodate the respective user in an upright state, e.g. walking or standing, on a ground surface across which it is desired to move. To this end, the base 104 is open in the region of the station to allow the primary user to walk or stand on the ground. The station provided between the first and second sides 105, 106 of the frame 102, which extend in the longitudinal direction.

The upper potion 108 typically comprises an inverted U or substantially arcuate shape however it may also comprise a substantially square or rectangular shape or any other suitable shape. Typically, the frame 102 is made from any combination of, or at least one of: metal; plastic; or composite material such as carbon fibre; or any other suitable material. The castors 1 are typically mounted on the base 104, typically on the underside of the base 104. In a preferred embodiment the castors 1 are mounted upon opposing ends of the underside of both the first and second sides 105, 106 of the base 104.

Optionally the support apparatus 100 comprises means for receiving and supporting the primary user (not shown) such as a coupleable garment or the other attachment means or the like. Advantageously, the means for receiving and supporting a primary user fully supports the user's weight when the user is inserted into the support apparatus 1. The means for receiving and supporting the user may comprise a structural element or seat or any other suitable receiving means.

Figure 2 illustrates the walking support apparatus 100 with the castors 1 having their respective locking means 7 adopting the first state such that the wheels are operable to swivel in any direction to allow the walking support apparatus 100, and in particular the user when utilising this, to be able to walk with the aid of the apparatus in any direction. Figure 3 illustrates the walking support apparatus 100 with the castors 1 having their respective locking means 7 adopting the second state such that the wheels are restricted with the orientation of the wheels locked in a pre-defined direction such that the walking support apparatus 100, and in particular the user when utilising this, is restricted to movement in the pre-defined direction, such as shown in Figure 3 which is a side to side direction.

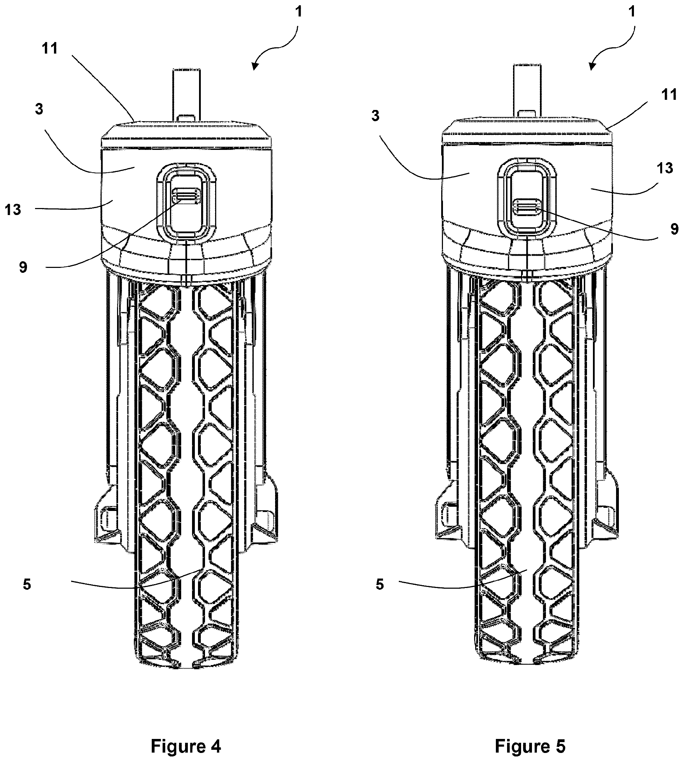

Figure 4 is a front plan view of the castor 1 showing the actuation means 9 in the second positon which is configured to cause the locking means 7 to adopt the second state. Figure 5 is a front plan view of the castor 1 showing the actuation means 9 in the first position which is configured to cause the locking means 7 to adopt the first state.

Figures 6 to 8 are top plane views showing the transition between first and second states of the locking means 7 and the engagement of the locking means 7 to restrict the pivoting movement of the lower part 13 relative to the upper part 11 of the castor body 3. For example, the substantially circular shaped upper part 11 is shown having four pin receiving apertures 17 provided therein at 90, 180, 270 and 360 degree positions around the upper part 11, typically the circumference thereof. The pin 15 is also shown provided in the lower part 13. Beginning with Figure 6 the locking means 7 is shown in the first state such that the pin 15 does not extend from the lower part 13 such as to engage the upper part 11. Accordingly the lower part 13 is operable to swivel in any direction relative to the upper part 11 such as to allow multidirectional movement of the walking support apparatus 100 to which the castors 1 are coupled. Figure 7 illustrates the transition between the first state and the second state of the locking means 7, wherein the lower part 13 is pivoted relative to the upper part 11 but the pin 15 has not aligned with the pin receiving aperture 17 such that the pin 15 abuts the pin blocking member 13 which extends the length of the transition section 21. Figure 8 illustrates when the lower part 13 has pivoted relative to the upper part 11 such that the pin 15 and pin receiving aperture 17 align such as to engage the upper and lower parts 11, 13 such as to restrict the movement of the walking support apparatus 100 along the predefined direction which as shown in Figure 3 is a side to side direction. It should be understood that reference to a side to side or sideways direction as described herein is intended to mean wherein the user when coupled to or otherwise engaging the frame moves in a direction which is perpendicular to the direction in which their body, in particular their front, substantially faces toward in-use.

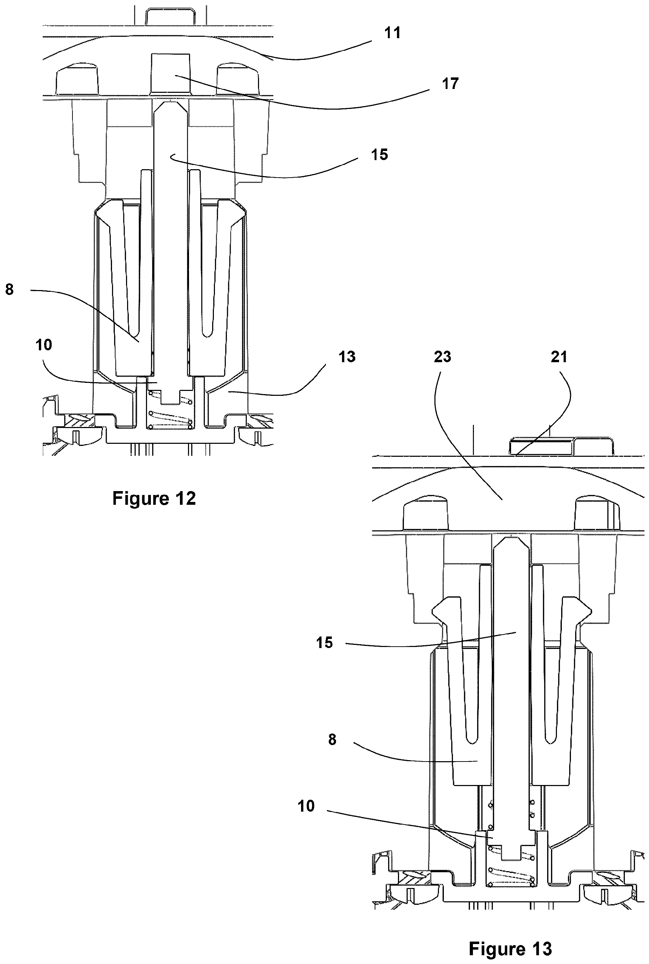

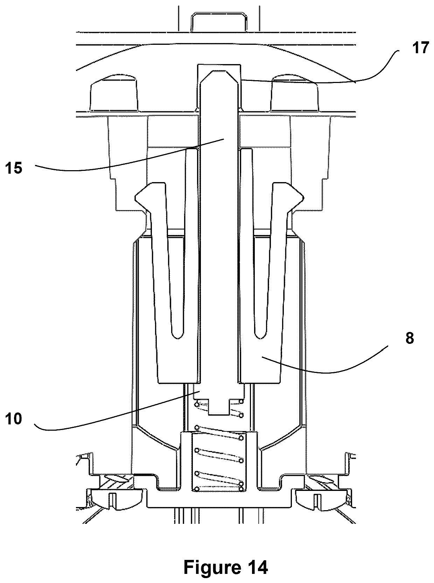

Figures 9 to 11 show a side sectional view of the castor body 3. For example, when the switch 7 is in the first position, as shown in Figure 9, the sleeve 8 retains the pin 15 in the first state wherein the pin 15 is entirely retained within the lower part 13 of the castor body 3. Upon actuation of the switch 7 such that it adopts the second position, as shown in Figure 11, the sleeve 8 is moved upwards within the lower part 13 of the castor body 3 in the direction of the upper part 11 until part of the sleeve 8 contacts an interior wall 14 of the lower part 13 which prevents further upward movement of the sleeve 8. Movement of the sleeve 8 in the upward direction allows for corresponding movement of the resiliently biased pin 15 such that the pin 15 extends up and away from the lower part 13 such as to engage with the pin receiving aperture 17 in the upper part 11 of the castor body 3. Figure 10 shows when the switch 7 is actuated such that it adopts the second position such as to cause the pin 15 to adopt the second state but the lower part 13 is pivoted relative to the upper part 11 such that the channel containing the pin 15 and one of the pin receiving apertures 17 is not aligned, such that the pin 15 abuts the pin blocking member 23 provided along the transitional section 21 of the upper part 11. This being also shown in Figures 7 and13. Advantageously, this ensures that engagement of the pin 15 and pin receiving apertures 17 only occurs at pre-defined positions which correspond to movement of the walking support apparatus 100 in pre-defined directions. Figures 12 to 14 show corresponding images to those of 9 to 11 but from a front sectional viewpoint.

In-use a user would be coupled to the walking support apparatus 100, initially the castors 1 would have the locking means 7 in the first state in which the castors are in an unlocked state and are free to swivel in any direction. Subsequently, the castors 1 may be actuated to adopt the second state or locked state. Upon transition to a sideways locked state the user would then be restricted to movement along a straight line in a sideways direction. Advantageously this movement pattern is beneficial for the user because it engages the muscles groups used for abductional and adductional movements, typical of those seen in the cruising phase of toddler's as they learn to walk. The nominal walking gait pattern also involves engaging these muscles to enable the legs to move towards and away from the sagittal plane of the body, critical to the skills of weight shifting and side stepping. This locked sideways state allows therapists to isolate and effectively train the user's muscles groups in a way that develops the aforementioned techniques and skills.

The invention is not limited to the embodiment(s) described herein but can be amended or modified without departing from the scope of the present invention.

## Claims

1. A castor, comprising:
a castor body for coupling the castor to an apparatus;
at least one wheel coupled to the castor body, wherein said wheel is operable to rotate about a wheel axis;
wherein the castor body is configured to swivel about a swivel axis which is substantially perpendicular to the wheel axis such as to rotate the orientation of the wheel with respect to the swivel axis; and
a locking means which is configured to adopt at least a first state and a second state;
Wherein said first state, the locking means is configured to allow swivelling motion of the castor body about the swivel axis;
wherein said second state the locking means is configured to inhibit the swivelling motion of the castor body about the swivel axis such that the orientation of the castor wheel is locked relative to the swivel axis.

2. The castor of claim 1, wherein the castor body comprises an upper part and a lower part, wherein the wheel is coupled to the lower part which is configured to swivel about the swivel axis relative to the upper part.

3. The castor of claim 2, wherein the locking means in said second state is configured to couple the upper and lower parts of the castor body together to prevent swivelling movement of the lower part relative to the upper part.

4. The castor of claim 3, wherein the locking means comprises co-operable male and female members which are configured to releasably couple together such as to couple the upper and lower parts of the castor body together.

5. The castor of claim 4, wherein the locking means comprises at least one pin and at least one aperture within which at least part of said pin is receivable such as to couple the upper and lower parts together.

6. The castor as claimed in claim 5,
wherein the pin comprises a resiliently biased pin; or
wherein the pin comprises a resiliently biased pin; and
wherein said pin is retained entirely within the lower part of the castor body when the locking means adopts said first state; or
wherein the pin comprises a resiliently biased pin; and wherein said pin is retained entirely within the lower part of the castor body when the locking means adopts said first state; and
wherein said pin receiving aperture is located on the upper part of the castor body.

7. The castor as claimed in claim 6, wherein the upper part comprises a plurality of pin receiving apertures.

8. The castor as claimed in claim 7, wherein the upper part is substantially circular in shape and wherein the pin receiving apertures are spaced apart around the edge of the upper part.

9. The castor as claimed in claim 8, wherein the upper part comprises four pin receiving apertures and wherein the pin receiving apertures are spaced apart from one another such that they are located at 90, 180, 270 and 360 degree positions around the edge of the circular shaped upper part.

10. The castor as claimed in any of claims 7 to 9, wherein the upper part comprises a plurality of transitional sections located between the plurality of pin receiving apertures.

11. The castor as claimed in claim 10, wherein the transitional sections comprise a pin blocking member which is configured to allow the lower part of the castor body to swivel between positions defined by the pin receiving apertures in the upper part of the castor body when the locking means has adopted the second state.

12. The castor of any preceding claim, further comprising an actuation means which is configured to vary the locking means between the first and second states; or
further comprising an actuation means which is configured to vary the locking means between the first and second states; and
wherein the actuation means comprises a switch which is variable between first and second positions corresponding to the first and second states of the locking means respectively; or
further comprising an actuation means which is configured to vary the locking means between the first and second states; and
wherein the actuation means comprises a switch which is variable between first and second positions corresponding to the first and second states of the locking means respectively; and
wherein the actuation means further comprise a sleeve within which the resiliently biased pin is slidably received at least in part; or further comprising an actuation means which is configured to vary the locking means between the first and second states; and
wherein the actuation means comprises a switch which is variable between first and second positions corresponding to the first and second states of the locking means respectively; and
wherein the actuation means further comprise a sleeve within which the resiliently biased pin is slidably received at least in part; and
wherein the switch and sleeve are coupled together such that movement of the switch between the first and second positions causes respective movement of the sleeve, wherein the sleeve is open ended at both sides and accommodates the pin therein, at least in part.

13. The castor as claimed in claim 12, wherein the pin at one end, is shaped and dimensioned for engagement with the pin receiving aperture whilst at the opposing end the pin comprises one or more lateral protrusions which are configured to abut the sleeve such as to restrict the movement of the pin within the sleeve.

14. A walking support apparatus, comprising:
A frame; and
At least one castor as recited in any of the previous claims.

15. The walking support apparatus as claimed in claim 14, further comprising a plurality of the castors as recited in any of the previous claims.
